(19) Europäisches Patentamt / European Patent Office / Office européen des brevets

(11) **EP 3 801 046 B1**

(12) **FASCICULE DE BREVET EUROPEEN**

(45) Date de publication et mention
de la délivrance du brevet:
**04.03.2026  Bulletin 2026/10**

(21) Numéro de dépôt: **19737840.9**

(22) Date de dépôt: **04.06.2019**

(51) Classification Internationale des Brevets (IPC):
*A23K 40/00* (2016.01)   *A23K 10/18* (2016.01)
*A23K 10/32* (2016.01)   *A23K 50/10* (2016.01)

(52) Classification Coopérative des Brevets (CPC):
**A23K 10/18; A23K 10/32; A23K 50/10;** Y02P 60/87

(86) Numéro de dépôt international:
**PCT/FR2019/051327**

(87) Numéro de publication internationale:
**WO 2019/234349 (12.12.2019 Gazette 2019/50)**

(54) **PROCEDE D'AMELIORATION DE LA DEGRADATION RUMINALE DE LA PAILLE DE BLE**

VERFAHREN ZUR VERBESSERUNG DES RUMINALEN ABBAUS VON WEIZENSTROH

PROCESS FOR IMPROVING RUMINAL DEGRADATION OF WHEAT STRAW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.06.2018  FR 1854870**

(43) Date de publication de la demande:
**14.04.2021  Bulletin 2021/15**

(73) Titulaire: **Lesaffre et Compagnie**
**75001 Paris (FR)**

(72) Inventeurs:
 • **JULIEN, Christine**
  **31360 Sepx (FR)**
 • **MARDEN, Jean-Philippe**
  **31670 Labège (FR)**

(74) Mandataire: **Plasseraud IP**
**104 Rue de Richelieu**
**CS92104**
**75080 Paris Cedex 02 (FR)**

(56) Documents cités:
**CN-A- 101 606 579**

 • **MUAZZEZ CÖMERT ET AL: "Effects of *Saccharomyces cerevisiae* Supplementation and Anhydrous Ammonia Treatment of Wheat Straw on *In-situ* Degradability and, Rumen Fermentation and Growth Performance of Yearling Lambs", ASIAN-AUSTRALASIAN JOURNAL OF ANIMAL SCIENCES., vol. 28, no. 5, 4 February 2015 (2015-02-04), KR, pages 639 - 646, XP055528766, ISSN: 1011-2367, DOI: 10.5713/ajas.14.0757**
 • **OLIVIER BASOLE KASHONGWE ET AL: "Improving the nutritive value of wheat straw with urea and yeast culture for dry season feeding of dairy cows", TROPICAL ANIMAL HEALTH AND PRODUCTION., vol. 46, no. 6, 10 May 2014 (2014-05-10), GB, pages 1009 - 1014, XP055528768, ISSN: 0049-4747, DOI: 10.1007/ s11250-014-0598-1**
 • **S. X. TANG ET AL: "Effects of yeast culture and fibrolytic enzyme supplementation on in vitro fermentation characteristics of low-quality cereal straws1", JOURNAL OF ANIMAL SCIENCE, vol. 86, no. 5, 1 May 2008 (2008-05-01), US, pages 1164 - 1172, XP055528746, ISSN: 0021-8812, DOI: 10.2527/jas.2007-0438**

- **ZUO WANG ET AL: "Evaluation of Different Yeast Species for Improving <i>In vitro</i> Fermentation of Cereal Straws", ASIAN-AUSTRALASIAN JOURNAL OF ANIMAL SCIENCES., vol. 29, no. 2, 3 September 2015 (2015-09-03), KR, pages 230 - 240, XP055528770, ISSN: 1011-2367, DOI: 10.5713/ajas.15.0188**
- **"Probiotic in Animals", 3 October 2012, INTECH, ISBN: 978-953-51-0777-4, article FREDERIQUE CHAUCHEYRAS-DURAND ET AL: "Use of Yeast Probiotics in Ruminants: Effects and Mechanisms of Action on Rumen pH, Fibre Degradation, and Microbiota According to the Diet", XP055528772, DOI: 10.5772/50192**
- **LACOMBE: "Effets d'une levure autolysée S. cerevisiae sur les performances in vitro de fermentation ruminale", 1 January 2015 (2015-01-01), pages 3430, XP055621252, Retrieved from the Internet <URL:http://www.journees3r.fr/IMG/pdf/Texte__13_affiche_Alimentation_D-Lacombe.pdf> [retrieved on 20190911]**
- **ANONYMOUS: "Levures autolysées - Biomin améliore la digestibilité des fibres", 19 November 2012 (2012-11-19), XP055621254, Retrieved from the Internet <URL:http://www.web-agri.fr/conduite-elevage/alimentation/article/biomin-ameliore-la-digestibilite-des-fibres-1172-84689.html> [retrieved on 20190911]**
- **LACOMBE: "Effets d'une levure autolysée S.cerevisiae sur les performances in vitro de fermentation ruminale", 1 January 2014 (2014-01-01), XP055621258, Retrieved from the Internet <URL:http://www.journees3r.fr/IMG/pdf/3R2015_Poster_D_Lacombe_Alim_Texte13.pdf> [retrieved on 20190911]**
- **BIJJA: "Effets de l'addition de produits à base de levures sur les performances zootechniques d'agneaux à l'engraissement", 1 January 2014 (2014-01-01), XP055621260, Retrieved from the Internet <URL:http://www.journees3r.fr/IMG/pdf/Texte_39_affiche_Alimentation_M-Bija.pdf> [retrieved on 20190911]**
- **CANO LOPEZ: "Comparaison de l'effet de l'apport en levures Saccharomyces cerevisiae vivantes ou inactivées sur les performances de croissance de bovins en engraissement", 1 January 2010 (2010-01-01), XP055621262, Retrieved from the Internet <URL:http://www.journees3r.fr/IMG/pdf/2010_10_24_CanoLopez.pdf> [retrieved on 20190911]**
- **SHURSON G C ED - PÉREZ JOSE FRANCISCO ET AL: "Yeast and yeast derivatives in feed additives and ingredients: Sources, characteristics, animal responses, and quantification methods", ANIMAL FEED SCIENCE AND TECHNOLOGY, ELSEVIER, AMSTERDAM, NL, vol. 235, 20 November 2017 (2017-11-20), pages 60 - 76, XP085306863, ISSN: 0377-8401, DOI: 10.1016/J.ANIFEEDSCI.2017.11.010**

## Description

### DOMAINE DE L'INVENTION

La présente invention se rapporte au domaine agricole de la nutrition animale et concerne un procédé d'amélioration de la dégradation ruminale du fourrage.

L'invention est définie par les revendications 1-8 annexées.

### ARRIERE-PLAN TECHNOLOGIQUE

La paille de blé représente une ressource peu onéreuse qui pourrait contribuer au renforcement de l'autonomie fourragère et alimentaire de certains élevages de ruminants. De plus, dans certaines zones géographiques, le fourrage représente une ressource qualitativement très importante qui pourrait avantageusement être valorisée en nutrition animale.

Cependant, l'utilisation de la paille de blé est limitée chez les ruminants à haut niveau de production tels que les bovins notamment. Effectivement, malgré sa richesse en fibres, la paille de blé a une faible valeur nutritionnelle du fait d'une mauvaise digestion par les ruminants. En effet, d'un point de vue chimique, la présence de liaisons entre les constituants de la paroi végétale entraîne une résistance plus ou moins forte à l'attaque du microbiote digestif ruminal. Cette résistance se traduit par une faible dégradation ruminale du fourrage chez l'animal.

Ainsi, afin d'améliorer la dégradation du fourrage, et notamment de la paille de blé, des recherches ont été menées depuis des décennies. Il a ainsi été démontré que le recours à des prétraitements chimiques et/ou enzymatiques permettait d'améliorer la dégradation ruminale..

Il a également été démontré que l'utilisation de levures vivantes permettait d'améliorer la dégradation de la paille de blé. Ainsi il est par exemple montré dans la publication Muazzez Cömert et al. (Asian-Australasian Journal of Animal Sciences, Vol. 28, No. 5, 2015) que l'administration à des moutons de paille de blé prétraitée chimiquement avec de l'ammoniaque et de levure vivante *Saccharomyces cerevisiae* permettait d'améliorer la dégradation de la paille de blé.

Il existe cependant toujours à ce jour le besoin de disposer de nouveaux procédés permettant d'améliorer la dégradation ruminale de la paille de blé, lesdits procédés étant peu coûteux et permettant une mise en oeuvre à l'échelle d'une exploitation agricole. La valorisation de la paille de blé permet ainsi d'améliorer l'autonomie fourragère et globale de l'élevage.

Il est donc du mérite des Inventeurs d'avoir mis au point un procédé permettant de répondre à tout ou partie des problèmes de l'art antérieur. Les Inventeurs ont en effet découvert de manière surprenante que l'administration de levures non vivantes à des ruminants permettait une amélioration effective sur la dégradation de la paille de blé.

Avantageusement selon l'invention il n'est pas nécessaire de procéder à un prétraitement chimique de la paille de blé : l'utilisation seule des levures non vivantes est suffisante.

Les levures non vivantes ont notamment pour avantage, par rapport à des levures vivantes, de présenter des coûts moins élevés, d'être plus facile à manipuler, de ne pas présenter de contraintes de stockage, de stabilité ou de conditionnement, de ne pas présenter de contraintes règlementaires etc.

### RESUME DE L'INVENTION

Un premier objet de l'invention concerne un procédé d'amélioration de la dégradation de la paille de blé chez un ruminant comprenant une étape d'alimentation du ruminant avec la paille de blé, ledit procédé étant caractérisé en ce qu'il comprend en outre une étape d'administration d'un prébiotique choisi parmi une levure autolysée, un extrait de levure, ou leurs mélanges, ladite administration du prébiotique étant réalisée simultanément à l'étape d'alimentation dudit ruminant, ladite levure étant une levure Saccharomyces cerevisiae, et ledit procédé étant encore caractérisé en ce que ladite paille de blé n'a pas subi de prétraitement chimique avant de l'administrer au ruminant.

Un second objet de l'invention concerne l'utilisation chez un ruminant d'un prébiotique choisi parmi une levure autolysée, un extrait de levure, ou leurs mélanges, simultanément à alimentation dudit ruminant avec de la paille de blé, ladite levure étant une levure Saccharomyces cerevisiae et ladite paille de blé étant une paille qui n'a pas subi de prétraitement chimique.

### DESCRIPTION DETAILLEE

Un premier objet de l'invention concerne un procédé d'amélioration de la dégradation de la paille de blé chez un ruminant selon la revendication 1.

La dégradation est définie comme étant la dégradation ruminale des aliments sous l'action des micro-organismes du réticulo-rumen chez le ruminant.

Au sens de la présente invention, le terme « prébiotique » désigne un nutriment non-digestible qui, via sa métabolisation par les micro-organismes du reticulo-rumen, module la composition et/ou l'activité du microbiote ruminal, conférant par là un bénéfice physiologique à l'hôte.

Le procédé selon l'invention permet donc d'améliorer la dégradation de la paille de blé lorsque celle-ci est utilisée pour nourrir un ruminant.

En effet, le procédé mis au point permet de stimuler l'activité fermentaire du microbiote et en particulier l'activité fibrolytique permettant ainsi d'améliorer la dégradation de la paille de blé.

L'ampleur de cette dégradation conditionne la digestibilité dans l'ensemble du tube digestif et, par conséquent, la valeur énergétique du régime alimentaire du ruminant.

La digestibilité est un critère qui définit le degré auquel une matière organique est digérée par un animal.

De plus, en améliorant la dégradation de la paille de blé, le procédé selon l'invention permet également de mieux la valoriser en alimentation animale car à l'heure actuelle elle est sous utilisée en raison des difficultés qu'ont les ruminants pour la digérer comparativement à d'autres aliments et en particulier d'autres fourrages.

**La première étape du procédé selon l'invention consiste donc à alimenter un animal avec de la paille de blé.**

La paille de blé correspond au produit agricole représenté par la partie de la tige ou chaume de blé. La paille de blé fournie est celle classiquement utilisée par l'homme du métier en alimentation animale et peut se présenter sous différentes formes, aussi bien sous forme de bottes de paille que sous une forme en vrac.

Selon un mode de réalisation particulier, la paille peut subir au préalable une étape de traitement mécanique dont l'objectif est de réduire la taille des brins et de permettre à la fois une meilleure accessibilité des fibres aux traitements ultérieurs si besoin et une meilleure dégradation. Selon ce mode de réalisation particulier, la paille de blé peut préalablement subir un hachage, une lacération ou défibrage, ou encore un broyage.

Cette étape d'alimentation est une étape classique bien connue de l'homme du métier de l'élevage. Les animaux sont alors nourris avec la paille de blé. D'une manière préférentielle, les animaux sont des ruminants comme par exemple la vache ou le bœuf.

Selon l'invention il n'est pas nécessaire de pré-traiter chimiquement (par exemple avec de l'ammoniaque) la paille de blé avant de l'administrer au ruminant.

**La deuxième étape du procédé selon l'invention consiste à administrer un prébiotique à l'animal.**

L'étape d'administration consiste à administrer le prébiotique au ruminant de manière à ce que ce dernier se retrouve dans le reticulo-rumen dudit ruminant.

Un exemple d'administration du prébiotique est la voie orale.

Cette étape d'administration est réalisée simultanément à l'étape d'alimentation du ruminant avec la paille de blé.

D'une manière tout à fait surprenante, les Inventeurs ont en effet constaté qu'une étape d'administration d'un prébiotique permettait d'améliorer de façon significative la dégradation de la paille de blé.

Le prébiotique est un extrait de levure ou une levure autolysée.

De façon classique, l'extrait de levure, la fraction pariétale de levure et la levure autolysée sont obtenus par un procédé d'autolyse. L'extrait de levure et la fraction pariétale de levure comprennent une étape supplémentaire de séparation de la fraction soluble et de la fraction insoluble ; l'extrait de levure correspondant à la fraction soluble et la fraction insoluble à la fraction pariétale de levure.

Les procédés d'obtention d'extraits de levure sont connus dans l'art (voir par exemple l'ouvrage de référence "Yeast Technology", 2ème édition, 1991, G. Reed et T.W. Nogodawithana, publié par Van Nostrand Reinhold, New York, ISBN 0-442-31892-8).

Le prébiotique selon l'invention est issu d'une levure de l'espèce *Saccharomyces cerevisiae*.

Selon un autre mode de réalisation de l'invention, le ruminant appartient à la famille des *Bovidae.* La famille des bovidés (*Bovidae*) comprend plusieurs sous-familles dont notamment les bovinés (dont font partie les bovins) et les caprinés (dont font partie les ovins et les caprins).

Un gros ruminant est choisi parmi les bovins adultes ou en phase de croissance.

Un petit ruminant est choisi parmi les ovins et caprins, adultes ou en phase de croissance.

Selon un mode de réalisation particulier, le prébiotique est administré à une dose de 2 à 20 g/tête/jour pour les gros ruminants, à savoir les bovins, de préférence une dose de 5 à 10 g/tête/jour.

Le prébiotique est administré à une dose de 0,5 à 5 g/tête/jour pour les petits ruminants, à savoir les ovins et les caprins, de préférence une dose de 1 à 2 g/tête/jour.

Le prébiotique se présente sous une forme adaptée à une administration animale. Ainsi, le prébiotique peut être sous la forme de gélules, de bolus, de poudre, de granulés. De préférence, le prébiotique est sous forme de poudre.

Une gélule ou capsule est une préparation solide, constituée d'une enveloppe dure ou molle de forme et de capacité variable.

Un comprimé ou un bolus est une préparation solide contenant une unité de prise d'un ou plusieurs principes actifs (ou préparation). Ils sont obtenus par compression d'un volume constant de particules. Destinés au bétail, ils deviennent plus gros et on les appelle alors bolus.

Selon un mode de réalisation particulier de l'invention, lorsque le prébiotique est administré simultanément avec la paille de blé, ledit prébiotique pourra par exemple se trouver sous forme de poudre que l'on mélangera ensuite à la paille de blé. Le mélange est ensuite utilisé pour alimenter le ruminant.

L'amélioration de la dégradation de la paille de blé peut être déterminée par les techniques connues de l'homme du métier comme par exemple par des mesures de la perte de matière sèche par incubation dans du liquide ruminal. Le détail des mesures est présenté dans la partie exemple ci-après.

Le procédé selon l'invention est particulièrement avantageux car il permet de manière surprenante d'améliorer la dégradation de la paille de blé dans le rumen et ainsi une meilleure assimilation de la paille de blé par l'animal.

Le procédé de l'invention est simple à mettre en oeuvre, et peu coûteux, en ce sens qu'il ne requiert que l'utilisation de levures non vivantes.

Il est donc du mérite de la présente invention d'avoir pu développer un procédé permettant une amélioration de la dégradation de la paille, ledit procédé pouvant être mis en œuvre à l'échelle d'un élevage sans présenter de surcroît de travail ou de surcoût dommageable. Au contraire, le procédé selon l'invention permet de potentialiser la paille de blé et permet ainsi aux animaux de présenter une meilleure digestion vis-à-vis de cet aliment qui constitue parfois une des ressources principales.

Grâce au procédé selon l'invention, la paille de blé est mieux valorisée par les ruminants et il est plus simple pour les élevages de tendre vers l'autosuffisance alimentaire sans engendrer de surcout important.

Un second objet de l'invention concerne l'utilisation chez un ruminant d'un prébiotique selon la revendication 6.

Le prébiotique est un extrait de levure ou une levure autolysée. Selon un mode de réalisation particulier, dans l'utilisation telle que ci-dessus définie, le prébiotique est administré à une dose de 2 à 20 g/tête/jour pour les gros ruminants, à savoir les bovins, et de préférence à une dose de 5 à 10 g/tête/jour.

Le prébiotique est administré une dose de 0,5 à 5 g/tête/jour pour les petits ruminants, à savoir les ovins et les caprins, de préférence à une dose de 1 à 2 g/tête/jour.

Le prébiotique se présente sous une forme adaptée à l'administration animale. Ainsi, le prébiotique peut être sous la forme de gélules, de bolus, de poudre, de granulés. De préférence, le prébiotique est sous forme de poudre.

L'utilisation selon l'invention est particulièrement avantageuse car elle permet d'améliorer la dégradation de la paille de blé par les animaux. En effet, le procédé mis au point permet de stimuler l'activité fermentaire du microbiote et en particulier l'activité fibrolytique permettant ainsi d'améliorer la dégradation de la paille de blé.

L'invention sera mieux comprise à l'aide des exemples ci-après qui se veulent purement illustratifs et n'apportent en aucun cas une limitation.

## FIGURE

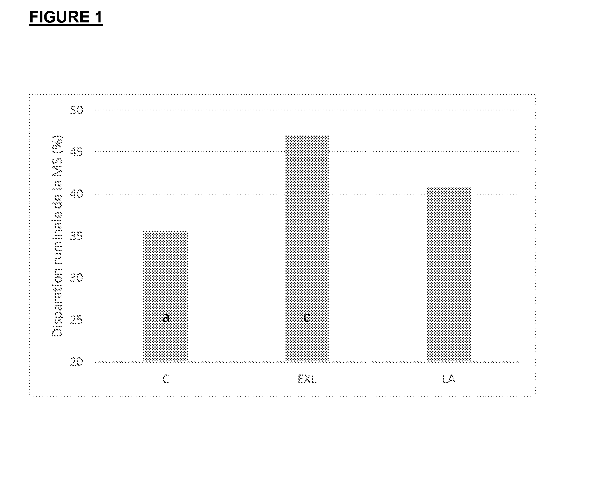

**Figure 1** : Effet du prébiotique sur la dégradation de la matière sèche de la paille de blé (en pourcentage % de disparition/dégradation de la matière sèche de la paille de blé).

## EXEMPLES

## Matériels et méthodes

### 1. Préparation des modules de fermentation

La paille de blé est broyée sur une maille de 2 cm (Electra) puis les particules fines sont éliminées grâce à un tamis de 1,18 mm (Penn State Separator).

Des fractions de 3 g sont ensuite pesées en triplicats et placées dans des flacons équipés d'un module de mesure de la pression (Ankom Technology).

### 2. Prébiotique

Afin de recréer les conditions *in vivo* de la co-administration de la paille de blé et du prébiotique selon le procédé de l'invention, le prébiotique est ajouté dans les modules au moment de l'incubation avec le liquide ruminal.

Le prébiotique utilisé est respectivement de l'extrait de levure ou de la levure autolysée, issus chacun de la souche déposée auprès de la Collection nationale de cultures de micro-organismes (CNCM) le 31 janvier 2018 sous le numéro CNCM I-5268.

Le prébiotique est administré à une dose 0,4 g/module (donc pour 3 g de paille).

### 3. Obtention du liquide ruminal pour la fermentation

Le contenu ruminal est collecté environ 2 heures post repas chez des vaches laitières taries, porteuses d'une canule ruminale et nourries avec une ration à base de paille de blé, d'ensilage de maïs et d'un supplément minéral et vitaminé.

Après la collecte, le contenu ruminal est filtré au travers d'un tamis métallique de maille 1,6mm afin d'obtenir le liquide ruminal.

Le liquide ruminal est ensuite mélangé à une solution tampon pH = 7 (ratio 1:1) pour former le milieu d'incubation. Ce dernier est mis à buller avec du $CO_2$ exempt d'oxygène.

### 4. Préparation des modules de fermentation

Plusieurs modules sont préparés. La composition des différents modules et leur répartition au sein de l'essai sont présentées ci-après :

Essai : Paille de blé et prébiotique (cf. point 2. ci-dessus).

- 3 modules contenant de la paille de blé et de l'extrait de levure, ci-après EXL ;
- 3 modules contenant de la paille de blé et de la levure autolysée, ci-après LA ;
- 3 modules de contrôle (C).

Les modules blancs, au nombre de 3, contiennent uniquement du milieu d'incubation tel que décrit au point 3. du présent exemple.

Les flacons d'incubation reçoivent 200 ml de milieu d'incubation chacun puis sont saturés avec du $CO_2$ exempt d'oxygène. La quantité de paille au sein de chaque module est de 3 grammes.

### 5. Mesure de la matière sèche dégradée.

Les flacons sont incubés à 39°C pendant 96h pour permettre la fermentation.

Après 96h d'incubation, les modules sont placés dans la glace afin de stopper la fermentation. La quantité de matière sèche non dégradée est ensuite mesurée en filtrant et séchant le résidu d'incubation à 60°C pendant 4 jours (ci-après nommé résidu).

Le substrat incubé correspond à la paille de blé.

La disparition de la matière sèche (en pourcentage %) est calculée selon la formule ci-après :

[substrat incubé - (résidu du substrat incubé - résidu du module de contrôle)]/substrat incubé x 100

Que ce soit pour le substrat incubé, les résidus du substrat incubé ou du module de contrôle, il s'agit de la moyenne des résultats obtenus pour les modules d'un même traitement.

### 6. Analyse statistique

Les résultats de dégradation de la matière sèche (en pourcentages %) ont été soumis à une analyse de variance à l'aide du modèle univarié général linéaire du logiciel de traitement statistique des données SPSS® (IBM®, SPSS®, version 22). Le modèle intègre les effets de la covariable et des produits, la covariable étant la dégradation de la matière sèche des contrôles (en pourcentage %). Une transformation log10 des valeurs exprimées en pourcentage a été effectuée pour l'analyse.

Les résultats sont considérés comme non significatifs lorsque P > 0,05.

Les différentes lettres a, b, c, utilisées indiquent si des valeurs sont significativement différentes ou non. Ainsi, les résultats ne sont pas significativement différents lorsque la même lettre est reportée (P>0,05).

**Résultats**

Effet du prébiotique sur la dégradation de la paille de blé

Les résultats de la figure 1 montrent que la dégradation de la matière sèche est augmentée de manière significative en présence du prébiotique, qu'il s'agisse de l'extrait de levure ou de la levure autolysée, l'extrait de levure étant plus performant que la levure autolysée. L'utilisation d'un prébiotique améliore donc la dégradation in vitro de la paille de blé.

Le procédé selon l'invention est donc particulièrement avantageux en ce qu'il permet d'améliorer la dégradation de la paille de blé.

## Revendications

1. Procédé d'amélioration de la dégradation de la paille de blé chez un ruminant comprenant une étape d'alimentation du ruminant avec la paille de blé, ledit procédé étant **caractérisé en ce qu'**il comprend, simultanément à l'alimentation du ruminant avec la paille de blé, une étape d'administration d'un prébiotique choisi parmi une levure autolysée, un extrait de levure ou leurs mélanges, et de préférence un extrait de levure, ladite levure étant une levure *Saccharomyces cerevisiae,* et ledit procédé étant encore **caractérisé en ce que** ladite paille de blé n'a pas subi de prétraitement chimique avant de l'administrer au ruminant.

2. Procédé selon la revendication 1, **caractérisé en ce que** le ruminant appartient à la famille des *Bovidae.*

3. Procédé selon la revendication 1 ou 2, **caractérisé en ce que** le prébiotique est administré à une dose comprise entre 2 et 20 g/tête/jour pour les gros ruminants, à savoir les bovins, et de préférence une dose comprise entre 5 et 10 g/tête/jour.

4. Procédé selon la revendication 1 ou 2, **caractérisé en ce que** le prébiotique est administré à une dose comprise entre 0,5 et 5 g/tête/jour pour les petits ruminants, à savoir les ovins et les caprins, et de préférence à une dose comprise entre 1 et 2 g/tête/jour.

5. Procédé selon l'une quelconque des revendications 1 à 4, **caractérisé en ce que** le prébiotique est sous forme de poudre.

6. Utilisation chez un ruminant d'un prébiotique choisi parmi une levure autolysée, un extrait de levure ou leurs mélanges, simultanément à l'alimentation du ruminant avec de la paille de blé, ladite levure est une levure *Saccharomyces cerevisiae* et ladite paille de blé est une paille qui n'a pas subi de prétraitement chimique.

7. Utilisation selon la revendication 6, **caractérisée en ce que** le prébiotique est administré à une dose comprise entre 2 et 20 g/tête/jour pour les gros ruminants, à savoir les bovins, et de préférence à une dose comprise entre 5 et 10 g/tête/jour.

8. Utilisation selon la revendication 6, **caractérisée en ce que** le prébiotique est administré à une dose comprise entre 0,5 et 5 g/tête/jour pour les petits ruminants, à savoir les ovins et les caprins, et de préférence à une dose comprise entre 1 et 2 g/tête/jour.

## Patentansprüche

1. Verfahren zur Verbesserung der Verdaulichkeit von Weizenstroh bei einem Wiederkäuer, umfassend einen Schritt der Fütterung des Wiederkäuers mit Weizenstroh, wobei das Verfahren **dadurch gekennzeichnet ist, dass** es gleichzeitig mit der Fütterung des Wiederkäuers mit Weizenstroh einen Schritt der Verabreichung eines Präbiotikums umfasst, das aus autolysierter Hefe, einem Hefeextrakt oder deren Mischungen, bevorzugt einem Hefeextrakt, gewählt ist, wobei die Hefe eine *Saccharomyces cerevisiae-Hefe* ist, und wobei das Verfahren ferner **dadurch gekennzeichnet ist, dass** das Weizenstroh vor der Verabreichung an den Wiederkäuer keiner chemischen Vorbehandlung unterzogen wurde.

2. Verfahren nach Anspruch 1, **dadurch gekennzeichnet, dass** der Wiederkäuer zur Familie der *Bovidae* gehört.

3. Verfahren nach Anspruch 1 oder 2, **dadurch gekennzeichnet, dass** das Präbiotikum in einer Dosis zwischen 2 und 20 g/Tier/Tag für große Wiederkäuer, nämlich Rinder, und bevorzugt in einer Dosis zwischen 5 und 10 g/Tier/Tag verabreicht wird.

4. Verfahren nach Anspruch 1 oder 2, **dadurch gekennzeichnet, dass** das Präbiotikum in einer Dosis zwischen 0,5 und 5 g/Tier/Tag für kleine Wiederkäuer, nämlich Schafe und Ziegen, und bevorzugt in einer Dosis zwischen 1 und 2 g/Tier/Tag verabreicht wird.

5. Verfahren nach einem der Ansprüche 1 bis 4, **dadurch gekennzeichnet, dass** das Präbiotikum in Pulverform vorliegt.

6. Verwendung eines Präbiotikums, gewählt aus autolysierter Hefe, Hefeextrakt oder Mischungen davon, bei einem Wiederkäuer, gleichzeitig mit der Fütterung des Wiederkäuers mit Weizenstroh, wobei die Hefe eine *Saccharomyces cerevisiae-Hefe* ist und das Weizenstroh ein Stroh ist, das keiner chemischen Vorbehandlung unterzogen wurde.

7. Verwendung nach Anspruch 6, **dadurch gekennzeichnet, dass** das Präbiotikum in einer Dosis zwischen 2 und 20 g/Tier/Tag für große Wiederkäuer, nämlich Rinder, und bevorzugt in einer Dosis zwischen 5 und 10 g/Tier/Tag verabreicht wird.

8. Verwendung nach Anspruch 6, **dadurch gekennzeichnet, dass** das Präbiotikum in einer Dosis zwischen 0,5 und 5 g/Tier/Tag für kleine Wiederkäuer, nämlich Schafe und Ziegen, und bevorzugt in einer Dosis zwischen 1 und 2 g/Tier/Tag verabreicht wird.

**Claims**

1. A process for improving the degradation of wheat straw in a ruminant comprising a step of feeding the ruminant with wheat straw, said process being **characterized in that** it further comprises, simultaneously with feeding the ruminant with wheat straw, a step of administering a prebiotic selected from an autolyzed yeast, a yeast extract, a yeast cell wall fraction or mixtures thereof, and preferably a yeast extract, the said yeast being *Saccharomyces cerevisiae* yeast, and the said process being **characterized in that** the wheat straw has not undergone a chemical pretreatment.

2. The process as claimed in claim 1, **characterized in that** the ruminant belongs to the *Bovidae* family.

3. The process as claimed in claims 1 or 2, **characterized in that** the prebiotic is administered at a dose between 2 and 20 g/head/day for large ruminants, namely bovines, and preferably a dose between 5 and 10 g/head/day.

4. The process as claimed in claims 1 or 2, **characterized in that** the prebiotic is administered at a dose between 0.5 and 5 g/head/day for small ruminants, namely sheep and goats, and preferably at a dose between 1 and 2 g/head/day.

5. The process as claimed in claims 1 to 4, **characterized in that** the prebiotic is in the form of powder.

6. The use, in a ruminant, of a prebiotic selected from an autolyzed yeast, a yeast extract, or mixtures thereof, simultaneously with feeding the ruminant with wheat straw, the said yeast being *Saccharomyces cerevisiae* yeast, and the said process being **characterized in that** the wheat straw has not undergone a chemical pretreatment.

7. The use as claimed in claim 6, **characterized in that** the prebiotic is administered at a dose between 2 and 20 g/head/day for large ruminants, namely bovines, and preferably at a dose between 5 and 10 g/head/day.

8. The use as claimed in claim 6, **characterized in that** the prebiotic is administered at a dose between 0.5 and 5 g/head/day for small ruminants, namely sheep and goats, and preferably at a dose between 1 and 2 g/head/day.

**FIGURE 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MUAZZEZ CÖMERT et al.** *Asian-Australasian Journal of Animal Sciences*, 2015, vol. 28 (5)

- **G. REED** ; **T.W. NOGODAWITHANA**. Yeast Technology. Van Nostrand Reinhold, 1991